# EUROPÄISCHE PATENTSCHRIFT

(11) **EP 1 479 137 B1**
(45) Veröffentlichungstag und Bekanntmachung des Hinweises auf die Patenterteilung: **02.11.2006**
(21) Anmeldenummer: 03704092.0
(22) Anmeldetag: 18.02.2003
(51) Int. Cl.: H01S 3/108

(54) **EINRICHTUNG ZUR ERZEUGUNG VON TERAHERTZ-STRAHLUNG SOWIE HALBLEITERBAUELEMENT**
DEVICE FOR GENERATING TERAHERTZ RADIATION, AND A SEMICONDUCTOR COMPONENT
DISPOSITIF POUR PRODUIRE UN RAYONNEMENT TERAHERTZIEN ET COMPOSANT SEMI-CONDUCTEUR

(30) Priorität: 28.02.2002 AT 3122002
(43) Veröffentlichungstag der Anmeldung: 24.11.2004
(73) Patentinhaber: Femtolasers Produktions GmbH, 2100 Korneuburg (AT)
(72) Erfinder: UNTERRAINER, Karl, A-2511 Pfaffstätten (AT); STRASSER, Gottfried, A-2511 Pfaffstätten (AT); DARMO, Juraj, SK-84105 Bratislava (SK); STINGL, Andreas, A-2100 Korneuburg (AT); LE, Tuan, A-1200 Wien (AT)
(74) Vertreter: Sonn & Partner Patentanwälte
(86) Internationale Anmeldenummer: PCT/AT2003/000053
(87) Internationale Veröffentlichungsnummer: WO 2003/073563

(56) Entgegenhaltungen:
- US-A- 5 729 017
- LIU ET AL.: "THz Radiation from Intracavity Saturable Bragg Reflector in Magnetic Field with Self-Started Mode-Locking by Strained Saturable Bragg Reflector" JPN. J. APPL. PHYS., Bd. 38, Nr. 11b, 15. November 1999 (1999-11-15), Seiten L1333-L1335, XP002272906 in der Anmeldung erwähnt
- BROWN E R: "A PHOTOCONDUCTIVE MODEL FOR SUPERIOR GAAS THZ PHOTOMIXERS" APPLIED PHYSICS LETTERS, AMERICAN INSTITUTE OF PHYSICS. NEW YORK, US, Bd. 75, Nr. 6, 9. August 1999 (1999-08-09), Seiten 769-771, XP000877773 ISSN: 0003-6951
- ZHENLIN LIU ET AL: "Efficient terahertz radiation generation from a bulk InAs mirror as an intracavity terahertz radiation emitter" JAPANESE JOURNAL OF APPLIED PHYSICS, PART 2 (LETTERS), 15 APRIL 2000, PUBLICATION OFFICE, JAPANESE JOURNAL APPL. PHYS, JAPAN, Bd. 39, Nr. 4B, Seiten L366-L367, XP002272907 ISSN: 0021-4922 in der Anmeldung erwähnt
- NEMEC H ET AL: "Study of carrier dynamics in LT GaAs by means of time-resolved emission terahertz spectroscopy" CONFERENCE DIGEST 2000 INTERNATIONAL QUANTUM ELECTRONICS CONFERENCE, 10. September 2000 (2000-09-10), Seiten 154-154, XP010540312

## Beschreibung

Die Erfindung betrifft ein Halbleiterbauelement mit einem Resonatorspiegel zur Verwendung in einem Laser, welcher Resonatorspiegel eingerichtet ist, einem modenverkoppelten Betrieb des Lasers zu ermöglichen, wobei das Halbleiterbauelement zugleich zur Erzeugung einer Terahertz (THz)-Strahlung auf Basis von auftreffenden Laserpulsen ausgebildet ist.

Weiters bezieht sich die Erfindung auf eine Einrichtung zur Erzeugung von Terahertz(THz)-Strahlung mit einem Kurzpulslaser mit Modenverkopplung, dem ein Pumpstrahl zugeführt wird, und mit einem derartigen einen Resonatorspiegel aufweisenden Halbleiterbauelement, das zugleich zur Herleitung der THz-Strahlung auf Basis von auftreffenden Laserpulsen ausgebildet ist.

Elektromagnetische Strahlung im Terahertz-Bereich (10¹¹ Hertz bis 10¹³ Hertz), und zwar in Form von kontinuierlichen Wellen ebenso wie in Form von Pulsen, wäre beispielsweise in der Spektroskopie, aber auch auf anderen Gebieten, z.B. in zukünftigen Rechnern, mit großem Vorteil verwendbar. Zur Erzeugung einer solchen Terahertz-Strahlung wurden bereits verschiedene Vorschläge gemacht, wie etwa in Sarukura et al., "All-Solid-State, THz Radiation Source Using a Saturable Bragg Reflector in a Femtosecond Mode-Locked Laser", Jpn. J. Appl. Phys., Vol. 36, Part 2, No. 5A, 1. May 1997, S. L560-L562. In diesem Artikel wird die Verwendung eines modenverkoppelten Lasers zur Erzeugung von kurzen Laserimpulsen in Verbindung mit einem Halbleiter-Spiegel, einem sättigbaren Bragg-Reflektor (SBR-Element) beschrieben, der eine Quantenquelle (engl. quantum well) zur Erzeugung der Terahertz-Strahlung umfasst. Das SBR-Element wird innerhalb des Resonators des modenverkoppelten Lasers eingebaut, wobei der Auftreffwinkel des Laserstrahls annähernd dem sog. Brewster-Winkel entspricht. Auf diese Weise kann die Terahertz-Strahlung ausgekoppelt werden. Von Nachteil ist dabei jedoch, dass jeder Laserimpuls auf das SBR-Element während seines Umlaufs im Resonator zweimal auftrifft, wodurch die Terahertz-Strahlung in vier verschiedenen Richtungen abgestrahlt wird. Dadurch ist eine effiziente Bündelung und Nutzung der erzeugten Strahlung nicht möglich, und es werden nur äußerst geringe Leistungen der Terahertz-Strahlung - im Bereich von nW - erzielt.

In einem weiteren Artikel von Sarukura et al., "THz-radiation Generation from an Intracavity Saturable Bragg Reflector in a Magnetic Field", Jpn. J.Appl. Phys. Vol.37, Nr .2A, 1. Feb.1998, S. L125-L126, wird eine etwas modifizierte Anordnung eines SBR-Elements in Verbindung mit einem Kurzpulslaser mit Modenverkopplung geoffenbart, wobei das SBR-Element als Endspiegel des Laserresonators eingesetzt wird. Das SBR-Element wird dabei im Feld eines permanenten Magneten angebracht, wobei das Magnetfeld das Abstrahlungsmuster der Hauptkeulen der Terahertz-Strahlung steuert, um so ein Einfangen der Strahlung innerhalb des Substrats des SBR-Elements zu vermeiden. Bei dieser Anordnung des SBR-Elements als Resonator-Endspiegel wurde zwar eine Erhöhung der Leistung der Terahertz-Strahlung, bis zu einem Wert von 0,8 µW, erzielt, jedoch wäre eine höhere Leistung für praktische Anwendungen weiterhin wünschenswert, abgesehen davon, dass das Vorsehen eines Magnetfeldes in der Praxis aufwendig ist.

Eine ähnliche Anordnung mit einem InAs(Indiumarsenid)-Spiegel in einem Magnetfeld ist in Liu et al. "Efficient Terahertz Radiation Generation from Bulk InAs Mirror as an Intracavity Terahertz Radiation Emitter", Jpn J. Appl. Phys. Vol. 39, Part 2, Nr. 4B, 15. April 2000, S.L366-L367, geoffenbart. Dabei ist der Auftreffwinkel des Laserstrahls am InAs-Spiegel sehr groß, im Bereich von 85°. Dieser Spiegel ist wieder innerhalb des Laserresonators angeordnet, so dass der bereits vorstehend erwähnte Nachteil gegeben ist, dass jeder Laserpuls zweimal den Spiegel trifft, und dass somit die Terahertz-Strahlung in vier Richtungen erzeugt wird. Die erzielte durchschnittliche Leistung der Terahertz-Strahlung lag bei Durchführung von Experimenten im Bereich von 5 nW , bei einer durchschnittlichen Laserresonator-Leistung von 4,5 W. Ein weiterer Nachteil ist, dass mit dem In-As-Spiegel ein eigenes Bauelement zusätzlich in den Laserresonator eingeführt wird. Die Anordnung eines SBR-Elements in einem Magnetfeld ist im Übrigen auch aus dem früheren Artikel von Liu et al., "THz Radiation from Intracavity Saturable Bragg Reflector in Magnetic Field with Self-Started Mode-Locking by Strained Saturable Bragg Reflector", Jpn. J. Appl. Phys., Vol.38, Part 2, Nr. 11B, 15. November 1999, S. L1333-L1335, bekannt.

Ein modenverkoppelter Laser mit einem SBR-Element ist ferner in Liu et al., "High Average Power Mode Locked Ti:Sapphire Laser with Intracavity Continuous-Wave Amplifier and Strained Saturable Bragg Reflector", Jpn. J. Appl. Phys., Vol. 38, Part 2, Nr. 10A, 1. Oktober 1999, S. L1109-L1111, beschrieben.

Aus der EP 606 776 A ist weiters eine Einrichtung zur Abgabe von Terahertz-Strahlung bekannt, bei der eine Übereinander-Anordnung von zwei Elektroden auf einem Substrat vorgesehen ist, wobei dazwischen ein LT-GaAs-Material vorliegen soll. Bei Auftreten von Laserimpulsen wird in der Ebene des Substrats die Terahertz-Strahlung erzeugt, was technologische Nachteile und eine geringe Robustheit mit sich bringt.

Eine andere Art der Erzeugung von Terahertz-Strahlung, unter Verwendung einer Antenne mit großer Apertur, ist in Fattinger et al., "Terahertz beams", Appl. Phys. Lett. Vol. 54, Nr. 6, 6. Februar 1989, S.490-492, beschrieben. Hier beruht die Erzeugung der Terahertz-Strahlung auf einem transienten Fotostrom der durch optisch erzeugte Landungsträger erhalten wird, die sich in einem elektrischen Feld zwischen zwei Elektroden bewegen. Das für den Emitter verwendete Halbleitermaterial hat typisch einen hohen Widerstand, wobei die Lebensdauer der Ladungsträger sehr kurz ist. Eine entsprechende Anordnung ist auch in US-5 729 017 A beschrieben. Dabei ist es auch bekannt, für das Halbleitermaterial, in dem die Ladungsträger erzeugt werden, Verbindungen wie GaAs (Gallium-Arsenid)-Verbindungen, AlGaAs (Aluminium-Gallium-Arsenid)-Verbindungen, LT-GaAs-Verbindungen und LT-AlGaAs-Verbindungen (LT-low temperature - Niedertemperatur) zu verwenden, vgl. auch Mitrofanov et al., "Thin terahertz detectors and emitters based on low temperature grwon GaAs on sapphire", Conference on Lasers and Electro-Optics (CLEO 2000). Technical Digest. Postconference Edition. TOPS Vol. 39; IEEE Cat. No. 00CH37088. Opt. Soc. America, Salem, MA, USA; May 2000; S. 528-529.

Die vorstehend erwähnten Niedertemperatur-Halbleitermaterialien werden bei niedrigen Temperaturen, in der Größenordnung von 200° bis 500°, aufgebracht, und die zeichnen sich durch kurze Rekombinationszeiten der Foto-Landungsträger aus.

Hierbei ist insbesondere auch bekannt, dass im Fall von LT-GaAs-Material mit der Licht-induzierten transienten Terahertz-Strahlung eine Rekombinationszeit der Ladungsträger von wenigen ps oder unter 1 ps erzielbar ist.

Es ist nun Aufgabe der Erfindung, ausgehend von den bekannten Untersuchungen ein Halbleiterbauelement bzw. eine Einrichtung vorzusehen, mit der bzw. mit dem die Erzeugung von Terahertz-Strahlung unter Verwendung eines modenverkoppelten Kurzpulslasers in effizienter Weise ermöglicht wird, wobei auch die Leistung der Terahertz-Strahlung wesentlich höher als bei den bekannten Anordnungen und bevorzugt auch steuerbar sein soll. Insbesondere sollen dabei Leistungen im Bereich von mW für die Terahertz-Strahlung ermöglicht werden.

Das erfindungsgemäße Halbleiterbauelement der eingangs erwähnten Art ist dadurch gekennzeichnet, dass auf dem Resonatorspiegel, vorzugsweise einem Resonatorendspiegel, eine für die Laserstrahlung teilweise durchlässige Halbleiterschicht vorgesehen ist, deren Absorptionskante unterhalb der Energie der Laserstrahlung liegt, und auf der in an sich bekannter Weise mit einer Vorspannungsquelle verbindbare Elektroden angebracht sind, um die THz-Strahlung im elektrischen Feld zu erzeugen und abzustrahlen.

In entsprechender Weise ist die erfindungsgemäße Einrichtung der eingangs angeführten Art dadurch gekennzeichnet, dass das Halbleiterbauelement ein erfindungsgemäßes Halbleiterbauelement, wie vorstehend angeführt, ist.

Vorteilhafte Ausführungsformen und Weiterbildungen sind in den abhängigen Ansprüchen angegeben.

Das erfindungsgemäße Konzept basiert somit allgemein darauf, den Halbleiter-Resonatorspiegel eines Kurzpulslasers mit einer Halbleiterschicht mit Elektroden, die auch als Antennen für die THz-STrahlung dienen, zu kombinieren und mit Hilfe des Laserstrahls die gewünschte Terahertz-Strahlung in dieser Halbleiterschicht auf dem Resonatorspiegel zu erzeugen. Dabei kann einfach mit Hilfe der angelegten Spannung, d.h. des angelegten elektrischen Felds, die Leistung der Terahertz-Strahlung eingestellt oder sogar moduliert werden.

Mehr im Einzelnen erzeugt dabei der intensitätsreiche Laserpuls bewegliche Ladungsträger im auf dem Halbleiter-Resonatorspiegel aufgebrachten Halbleitermaterial; von Bedeutung ist dabei natürlich, dass die Energie des Laserstrahls hoch genug ist, um die Ladungsträger zu erzeugen, d.h. die Energie des Laserstrahlung liegt über der Absorptionskante (d.i. jenes Energieniveau, ab dem Elektroden in das Leitungsband gehoben werden) des Halbleitermaterials, das daher dementsprechend - je nach Laserart - auszuwählen ist, was auf Grund von vorhandenen Halbleitermaterialdaten ohne weiteres vorgenommen werden kann. Durch das angelegte elektrische Feld werden die so erzeugten Elektronen und Löcher aus ihrer Ruhelage gebracht und je nach ihrer Ladung in entgegengesetzte Richtungen beschleunigt. Die dadurch entstehende Polarisation führt zu einer Rückstellkraft, wodurch eine Plasmaoszillation erhalten wird. Dadurch entsteht ein transienter Fotostrom, der die gewünschte Terahertz-Strahlung erzeugt, die beispielsweise durch den Resonatorspiegel hindurch abgestrahlt wird. Durch die angelegte Spannung kann dabei das Ausmaß der Beschleunigung der Ladungsträger und in der Folge die Intensität bzw. die Leistung der Terahertz-Strahlung gesteuert bzw. geregelt werden. Für die Erzeugung der Terahertz-Strahlung werden dabei in effizienter Weise die intensitätsreichen optischen Pulse des Kurzpulslasers genützt, ähnlich wie in den Vorschlägen von Sarukura et al., wie vorstehend erläutert, jedoch wird ein demgegenüber anderes Prinzip der Erzeugung der Terahertz-Strahlung, mit der gesonderten Halbleiterschicht auf dem Resonatorspiegel, und mit der Erzeugung der beweglichen Ladungsträger in diesem Halbleitermaterial durch die Laserpulse, ähnlich wie an sich beispielsweise in der vorgenannten US-5 729 017 A beschrieben, angewandt.

Die auf dem Resonatorspiegel aufgebrachte Halbleiterschicht soll naturgemäß die Laserstrahlung im Wesentlichen zum Resonatorspiegel durchlassen, wobei jedoch ein Teil der Energie der Laserstrahlung in der Halbleiterschicht zur Erzeugung der Ladungsträger verwendet wird. Andererseits ist das Material des Resonatorspiegels, wenn die Terahertz-Strahlung durch ihn hindurch abgegeben wird, so zu wählen, dass es für die erzeugte Terahertz-Strahlung im Wesentlichen durchlässig ist.

Der Resonatorspiegel ist bevorzugt ein Endspiegel, und er ist insbesondere durch einen an sich bekannten sättigbaren Bragg-Reflektor (kurz SBR-Element) gebildet. Um unerwünschte Sättigungseffekte zu vermeiden, ist es von Vorteil, wenn die Halbleiterschicht aus einem Halbleitermaterial mit kurzer Rekombinationszeit für freie Elektronen besteht. Das Material der Halbleiterschicht wird zweckmäßig in Anpassung an das Material des Resonatorspiegels gewählt, wobei es günstig ist, wenn die Halbleiterschicht eine Gallium-Arsenid (GaAs)-Schicht, insbesondere eine Niedertemperatur-Gallium-Arsenid (LT-GaAs)-Schicht, ist. Andererseits kann auch mit Vorteil vorgesehen werden, dass die Halbleiterschicht eine Aluminium-Gallium-Arsenid (AlGaAs)-Schicht, insbesondere eine Niedertemperatur-Aluminium-Gallium-Arsenid (LT-AlGaAs)-Schicht ist. Derartige Halbleiter-Materialien können auf einem Bragg-Reflektor aufgewachsen werden, der seinerseits in Schichten aus Aluminium-Gallium-Arsenid (AlGaAs)/Aluminium-Arsenid (AlAs) aufgebaut ist, wobei diese Schichten epitaktisch auf einem Gallium-Arsenid (GaAs)-Substrat aufgebracht sind. Mit Vorteil kann dabei Molekularstrahlepitaxie zur Anbringung der Schichten angewandt werden.

Zur Bündelung der erzeugten Terahertz-Strahlung kann es weiters günstig sein, wenn auf der von den Elektroden abgewandten Seite des Resonatorspiegels als Strahlsteuerelement eine dielektrische Linse für die abgegebene THz-Strahlung, z.B. aus Silizium (Si), Gallium-Arsenid (GaAs) oder dergl., angebracht ist.

Die Elektroden sind insbesondere streifenförmig ausgebildet und zueinander parallel angeordnet, wobei sie eine Breite von 5 µm bis einigen 10 µm aufweisen können, und wobei der Abstand zwischen den Elektroden von 30 µm bis zu einigen mm betragen kann. Der Abstand zwischen den Elektroden ist typisch größer als der Durchmesser des Laserstrahls, zumindest sollten die Abmessungen so gewählt sein, dass der Intensitäts-Schwerpunkt des Strahlquerschnitts des Laserstrahls zwischen den Elektroden liegt. Die Elektroden können beispielsweise aus Metall, wie Gold, Aluminium, Chrom, Platin-Gold-Schichtsystemen oder Titan-Gold-Schichtsystemen bestehen, es ist aber auch möglich, die Elektroden aus dotiertem Halbleitermaterial zu bilden, wobei die Halbleitermaterial-Elektroden ihrerseits mit metallischen Kontakten verbunden werden.

Bei derartigen Elektroden bzw. Antennenelementen für die Erzeugung der Terahertz-Strahlung und den vorstehenden Abmessungen bzw. Abständen können zur Erzeugung des elektrischen Felds Vorspannungen in der Größenordnung von 150 Volt und mehr, praktisch sogar bis zu 400 Volt, angelegt werden. Die Grenze ist hier durch die Durchbruchsspannung im Halbleitermaterial gegeben. Bevorzugt ist die Vorspannungsquelle zur Abgabe variabler Vorspannungen, zwecks Einstellung der Intensität der THz-Strahlung und/oder zur Modulation der THz-Strahlung, eingerichtet.

Die Erfindung wird nachstehend anhand von in der Zeichnung veranschaulichten, bevorzugten Ausführungsbeispielen, auf die sie jedoch nicht beschränkt sein soll, noch weiter erläutert. Es zeigen:
Fig. 1 ein Schema einer Einrichtung mit einem Kurzpulslaser mit Modenverkopplung und mit einem als Resonatorendspiegel eingesetztem Halbleiterbauelement, das zur Erzeugung von Terahertz-Strahlung eingerichtet ist;
Fig. 2 schematisch eine Ansicht eines solchen Halbleiterbauelements;
Fig.3 schematisch eine Draufsicht auf dieses Halbleiterbauelement, wobei auch das Anlegen einer Vorspannung an Elektroden dieses Halbleiterbauelements gezeigt ist;
Fig.4 in einem Diagramm den Zusammenhang zwischen angelegter Vorspannung und Impulsamplitude der erzeugten THz-Strahlung;
Fig.5 in einem Diagramm einen typischen Impuls der THz-Strahlung über der Zeit;
Fig.6 ein zugehöriges Frequenzspektrum der THz-Strahlung; und
Fig.7 in einer schematischen, schaubildlichen Darstellung ein modifiziertes Halbleiterbauelement mit zugehöriger Schaltung zum Anlegen einer elek-trischen Vorspannung.

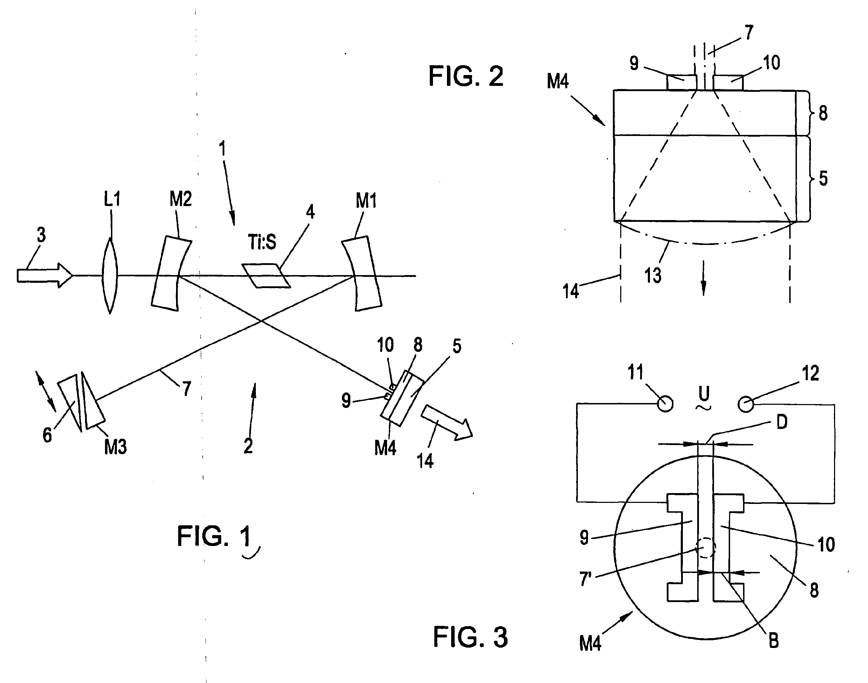

In Fig.1 ist schematisch ein Kurzpulslaser 1 veranschaulicht, in dem für die Kurzpulserzeugung z.B. das an sich bekannte "Kerr-lens mode locking"-Prinzip verwendet wird.

Der Kurzpulslaser 1 weist gemäß Fig.1 einen Laserresonator 2 auf, dem ein Pumpstrahl 3, z.B. ein Argonlaserstrahl, zugeführt wird. Der Pumplaser (z.B. Argonlaser) selbst ist der Einfachheit halber weggelassen und gehört dem Stand der Technik an.

Nach Durchlaufen einer Linse L1 und eines dichroitischen Spiegels M2 regt der Pumpstrahl 3 einen Laserkristall 4 an, im vorliegenden Beispiel einen Titan:Saphir(in der Literatur üblicherweise - und auch nachfolgend - kurz Ti:S bezeichnet)-Festkörperlaserkristall. Der dichroitische Spiegel M2 ist für den Pumpstrahl 3 durchlässig, jedoch hochreflektierend für den Ti:S-Laserstrahl. Dieser Laserstrahl, der Resonatorstrahl, trifft auf einen Laserspiegel M1 auf und wird von diesem zu einem auch zum Auskoppeln dienenden Laserspiegel M3 reflektiert. Dieser Laserspiegel M3 reflektiert den Laserstrahl wieder zum Spiegel M1 zurück, von wo der Laserstrahl zum Laserspiegel M2 reflektiert wird, wobei er den Laserkristall 4 ein zweites Mal durchläuft. Von dort wird der Laser-strahl dann zu einem Resonatorendspiegel M4 mit einem sättigbaren Bragg-Reflektor 5, nachstehend kurz SBR-Element genannt, reflektiert, wodurch ein an sich üblicher X-gefalteter Laserresonator 2 gebildet ist. Über den Auskoppelspiegel M3 wird der Laserstrahl unter Vorsehen einer Kompensationsmöglichkeit ausgekoppelt, wobei ein Kompensationsplättchen 6 sowie nicht näher gezeigte Spiegel in Dünnschichttechnik für eine Dispersionskompensation sowie dafür sorgen, dass keine unerwünschten Reflexionen in Richtung Laserresonator 2 auftreten. Der auf die beschriebene Weise im Laserresonator 2 erhaltene Laserstrahl ist in Fig.1 mit 7 bezeichnet.

Der Laserkristall 4 ist ein planparalleler Körper, welcher optisch nichtlinear ist und ein Kerrelement bildet, welches für höhere Feldstärken des Laserstrahls 7 eine größere wirksame optische Dicke besitzt, hingegen eine geringere wirksame Dicke aufweist, wenn die Feldstärke bzw. Intensität des Laserstrahls 7 geringer ist. Dieser an sich bekannte Kerreffekt wird zur Selbstfokussierung des Laserstrahls 7 ausgenutzt, d.h. der Laserkristall 4 bildet für den Laserstrahl 7 eine Fokussierungslinse.

Zur Modenverkopplung ("mode-locking") wird weiters im gezeigten Ausführungsbeispiel der sättigbare Bragg-Reflektor 5 in an sich herkömmlicher Weise verwendet.

Die Spiegel M1, M2 sind in an sich bekannter Dünnschichttechnik ausgeführt, d.h. sie sind je aus vielen Schichten aufgebaut, die bei der Reflexion des eine große spektrale Bandbreite aufweisenden ultrakurzen Laserpulses ihre Funktion ausüben. Die verschiedenen Wellenlängenkomponenten des Laserstrahls dringen unterschiedlich tief in die Schichten des jeweiligen Spiegels ein, bevor sie reflektiert werden. Dadurch werden die verschiedenen Wellenlängenkomponenten verschieden lang am jeweiligen Spiegel verzögert; die kurzwelligen Komponenten werden weiter außen reflektiert, die langwelligen Anteile hingegen tiefer im Spiegel. Dadurch werden die langwelligen Komponenten gegenüber den kurzwelligen Komponenten zeitlich verzögert. Auf diese Weise wird eine Dispersionskompensation insofern erhalten, als im Zeitbereich besonders kurze Pulse (vorzugsweise im Bereich von 10 Femtosekunden und darunter) ein breites Frequenzspektrum besitzen; dies kommt daher, dass die verschiedenen Frequenzkomponenten des Laserstrahls im Laserkristall 4 einen unterschiedlichen Brechungsindex "sehen", d.h. die optische Dicke des Laserkristalls 4 ist für die verschiedenen Frequenzkomponenten verschieden groß, und die verschiedenen Frequenzkomponenten werden daher beim Durchlaufen des Laserkristalls 4 verschieden verzögert. Diesem Effekt wird durch die genannte Dispersionskompensation an den Dünnschicht-Laserspiegeln M1, M2 begegnet.

Soweit vorstehend beschrieben handelt es sich um einen an sich herkömmlichen Aufbau eines Kurzpulslasers mit Modenverkopplung, und eine detailliertere Beschreibung desselben kann sich daher erübrigen.

Wesentlich für die angestrebte Erzeugung von Terahertz-Strahlung 14 ist nun, dass der Resonatorspiegel M4 in einer besonderen Weise mit zusätzlichen Mitteln ausgestattet ist, wie nunmehr unter Bezugnahme auch auf die Figuren 2 und 3 näher ausgeführt werden soll.

Im Einzelnen weist der Resonatorspiegel M4 als Halbleiterbauelement auf dem eigentlichen SBR-Element 5 (vgl. außer Fig.1 auch Fig.2) eine Halbleiterschicht 8 auf, die aus einem Halbleitermaterial mit kurzer Rekombinationszeit für freie Elektronen besteht. Auf dieser Halbleiterschicht 8 sind zwei im Wesentlichen streifenförmige, zueinander parallel verlaufende Elektroden 9,10 angebracht, die mit Anschlüssen 11 bzw. 12 (s. Fig.3) zum Anlegen einer Vorspannung U an die Elektroden 9, 10 verbunden sind. Der Abstand zwischen den streifenförmigen Elektroden 9, 10 ist in Fig. 3 mit D bezeichnet, und er wird so gewählt, dass der auftreffende Laserstrahl 7 mit seinem Strahlquerschnitt 7' (s. auch Fig.3) im Betrieb im Wesentlichen zwischen den Elektroden 9, 10 zu liegen kommt - zumindest sollte der Intensitätsschwerpunkt des Strahlquerschnitts 7' des Laserstrahls 7 zwischen den Elektroden 9, 10 liegen, um unnötige Verluste zu vermeiden. Dieser Abstand D kann beispielsweise 30 µm bis zu einige mm betragen. Die streifenförmigen Elektroden 9, 10 können andererseits eine Breite B von beispielsweise 5 µm bis zu einigen 10 µm aufweisen.

Das SBR-Element 5 als Spiegel und sättigbarer Absorber ist in üblicher Weise aus einer Vielzahl von dielektrischen Schichten aufgebaut, die in der Zeichnung jedoch nicht näher dargestellt sind, und die auf einem ebenfalls nicht näher ersichtlichen Substrat angebracht sind. Das Substrat kann aus einem herkömmlichen, für elektromagnetische Strahlung im THz-Bereich, insbesondere 10¹¹ Hz bis 10¹³ Hz, im Wesentlichen durchlässigen Material bestehen, und es dient als Träger für den Bragg-Reflektor. Beispielsweise wird ein übliches Gallium-Arsenid(GaAs)-Substrat mit hohem Widerstand verwendet, das Schichten aus Aluminium-Gallium-Arsenid bzw. Aluminium-Arsenid trägt, welche epitaktisch auf dem Gallium-Arsenid-Substrat aufgewachsen werden. Selbstverständlich sind jedoch auch andere Kombinationen von Halbleitermaterialien und dielektrischen Materialien möglich, um den Bragg-Reflektor aufzubauen, wobei auch andere herkömmliche Herstellungsverfahren (Dünnfilm-Techniken) verwendet werden können.

Die Halbleiterschicht 8 bildet einen sättigbaren Absorber, und sie besteht beispielsweise im Fall eines Bragg-Reflektors mit Aluminium-Gallium-Arsenid- bzw. Aluminium-Arsenid-Schichten aus einem bei niedriger Temperatur angebrachten Gallium-Arsenid, einer sog. LT(low temperature-Niedertemperatur)-GaAs-Schicht, die beispielsweise durch Molekularstrahlepitaxie (MBE - Molecular Beam Epitaxy) aufgebracht wird und eine sättigbare Absorption bei einer Wellenlänge von beispielsweise ungefähr 800 nm und eine Rekombinationszeit in der Größenordnung von Pikosekunden aufweist. Eine andere Möglichkeit besteht darin, für die Halbleiterschicht 8 LT-AlGaAs zu verwenden, wenn kürzere Laser-Wellenlängen verwendet werden. Die Dicke der Halbleiterschicht 8 wird im Hinblick auf die angestrebte Impulsenergie gewählt, die absorbiert wird, wobei die Funktion des Bragg-Reflektors 5 nicht verschlechtert werden sollte. In einem konkreten Ausführungsbeispiel wurde als Halbleiterschicht 8 eine LT-GaAs-Schicht mit einer Dicke von 326 nm bei 220°C auf einer AlGaAs/AlAs-Bragg-Reflektor-Struktur mit einer GaAs-Quantenquelle aufgewachsen. Die Halbleiterschicht 8 wurde danach in an sich bekannter Weise bei 600°C 10 Minuten lang wärmebehandelt, und daraufhin wurden Elektroden 9,10 aus Titan-Gold an der Oberseite der Halbleiterschicht 8 angebracht. Alternativ könnten Metallelektroden 9,10 aus Aluminium, Chrom, Platin-Gold etc. eingesetzt werden; die Wahl des Metalls für die Elektroden 9, 10 ist dabei nicht kritisch.

Die Breite B der Elektroden betrug 10 µm, und der Abstand D zwischen den Elektroden betrug 50 µm. Als Vorspannung U wurde eine Gleichspannung von 150 Volt an den so erhaltenen THz-Emitter angelegt.

Zur Bündelung der erzeugten und abzugebenen THz-Strahlung 14 kann, wie in Fig.2 mit strichpunktierten Linien veranschaulicht ist, an der den Elektroden 9,10 gegenüberliegenden Rückseite oder Außenseite des Resonatorspiegels M4 (also an der Rückseite des Substrats des SBR-Elements 5) ein Kollimator-Strahlsteuerelement in Form einer dielektrischen Linse 13 angebracht sein, wobei diese dielektrische Linse 13 die THz-Strahlung 14 in der gewünschten Richtung bündelt. Als Material für dieses Strahlsteuerelement 13 kommt beispielsweise Silizium mit hohem Widerstand, halbisolierendes Gallium-Arsenid oder Saphir in Frage. Eine derartige dielektrische Linse 13 war auch bei dem vorbeschriebenen praktischen Ausführungsbeispiel vorhanden.

Im Fall des vorbeschriebenen praktischen Ausführungsbeispiels wurde der so gebildete Resonatorspiegel M4 als Endspiegel im Laserresonator 2 des Kurzpulslasers mit Modenverkopplung angebracht, und die Elektroden 9,10 wurden an eine in Fig.2 bzw. 3 nicht näher gezeigte externe Spannungsversorgungseinheit zum Anlegen der Vorspannung U angeschlossen. Zu Folge des sättigbaren Absorbers (GaAs-Quantenquelle) im Laserresonator 2 wurde unabhängig von der Vorspannung an den Elektroden 9,10 eine Modenverkopplung erzielt. Ohne Vorspannung U an den Elektroden 9,10 wurde keine messbare THz-Strahlung festgestellt, bei Anlegen der Vorspannung U an die Halbleiterschicht 8 über die Elektroden 9,10 ergab sich jedoch eine THz-Strahlung, deren Intensität mit der Vorspannung stieg.

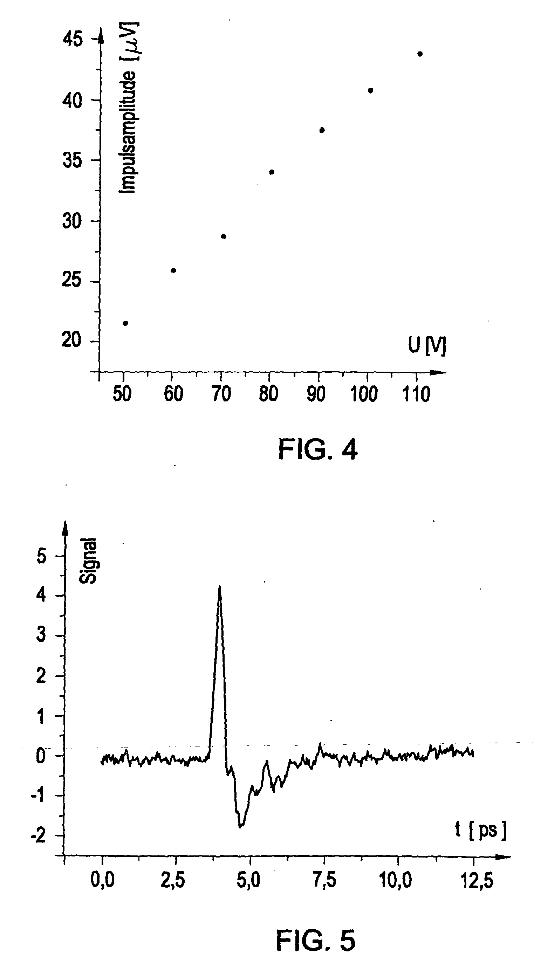

In Fig.4 ist der sich ergebende, im Wesentlichen lineare Zusammenhang zwischen der Impulsamplitude der THz-Strahlung (in µV) und der angelegten Vorspannung (in V) ersichtlich. Die durchschnittliche Strahlungsleistung wurde mit einem kalibrierten Silizium-Bolometer gemessen, wobei bei der vorliegenden einfachen Testausführung bereits ein Wert von 1,5 µW bei einer durchschnittlichen Resonatorleistung von 900 mW erhalten wurde. Die typische Form des transienten THz-Signals, das auf diese Weise im Resonatorspiegel M4, d.h. Halbleiterbauelement, erzeugt wird, ist in Fig.5 dargestellt. Wie ersichtlich ist im Wesentlichen ein einzelner schmaler Impuls vorhanden, was bedeutet, dass ein breitbandiges Signal erzielt wird. Für dieses angestrebte Auftreten eines einzelnen Impulses (anstatt mehrerer ausschwingender Impulse) ist die kurze Rekombinationszeit der Ladungsträger im Halbleitermaterial mitverantwortlich, und diese wird insbesondere im Fall einer Niedertemperatur-Aufbringung der Halbleiterschicht 8 erzielt.

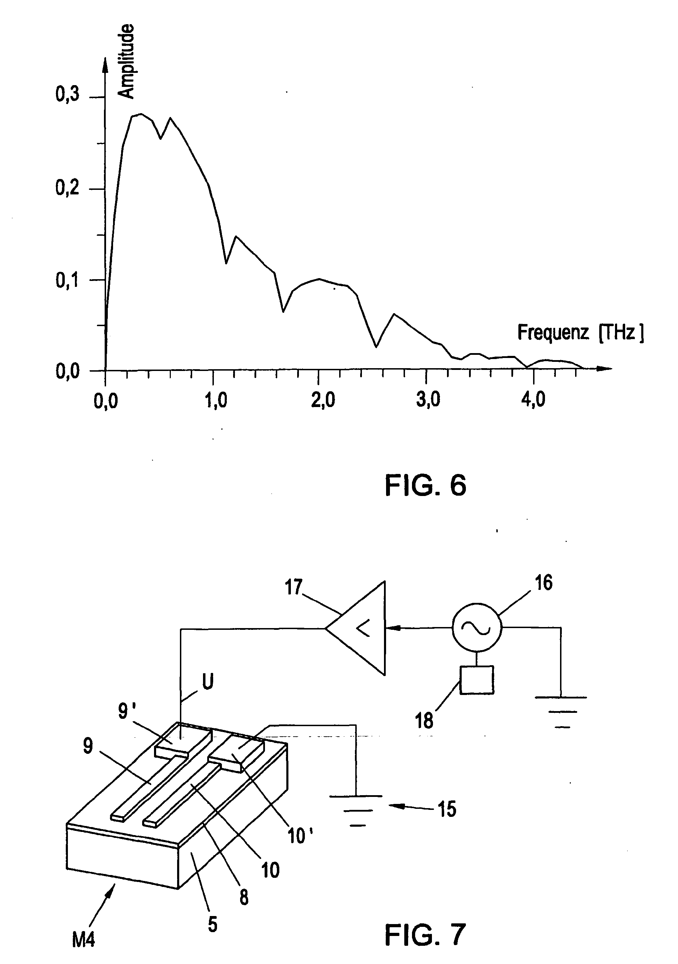

Die in Fig.5 dargestellte Wellenform des THz-Impulses (die Amplitude ist in willkürlichen Einheiten gezeigt) wurde mit Hilfe eines elektrooptischen Detektors registriert. Im Frequenzbereich ergibt sich ein entsprechender Amplitudenverlauf (wiederum mit der Amplitude in willkürlichen Einheiten) wie in Fig.6 gezeigt. Das Frequenzspektrum hat ein Maximum bei ungefähr 0,5 THz und erstreckt sich bis ca. 2,5 THz. Diese THz-Strahlung wird mit der Vorspannung U an den Emitter-Elektroden 9,10 spannungsgesteuert, wobei auch eine Modulation mit Frequenzen bis zu 50 kHz (vgl. die nachfolgende Erläuterung zu Fig.7) getestet wurde.

Die erzeugte THz-Strahlung 14 ist in Fig.2 mit einem Pfeil und mit strichlierten Linien und in Fig.1 mit einem Pfeil angedeutet.

Anstelle metallischer Elektroden sind zur Erzeugung der THz-Strahlung 14 auch Elektroden 9,10 aus hoch-dotiertem Halbleitermaterial, wie z.B. aus Gallium-Arsenid-Schichten, denkbar. Eine solche Ausführung ist dann von Vorteil, wenn der Strahlquerschnitt 7' der Laserstrahlung 7 einen größeren Durchmesser als der Abstand zwischen den Elektroden 9,10 aufweist und Reflexionen an den metallischen Elektroden 9,10 die Lasertätigkeit beeinträchtigen würden. Die Elektroden 9,10 werden dann beispielsweise in einem Ätzverfahren (Nassätzen oder trockenes chemisches Ätzen) hergestellt, und außerhalb des Auftreffbereichs dieser Laserstrahlung 7 können metallische Kontakte 9',10' an den Elektroden 9,10 aus Halbleiter-material angebracht werden, wie dies schematisch in Fig.7 bei einem modifizierten Resonatorendspiegel M4 dargestellt ist.

Die Breite der streifenförmigen Elektroden 9,10 kann wie erwähnt ganz allgemein beispielsweise von 5 µm bis zu mehreren 10 µm betragen, um den Gesamtwiderstand niedrig zu halten. Der Abstand zwischen den Elektroden 9,10 kann von 10 µm oder mehreren 10 µm bis zu mehreren mm betragen. Die Grenze wird hier zum einen durch die gewünschte Durchbruchsspannung gegeben sein und zum anderen durch den Strahlquerschnitt 7' des Laserstrahls 7 am THz-Emitter. Zumeist wird der Abstand zwischen den Elektroden 9,10 größer sein als der Durchmesser des Laserstrahls 7.

Im Übrigen ist in Fig.7 wiederum die Ausführung des Resonatorendspiegels M4 mit dem SBR-Element 5 und der Halbleiterschicht 8 ersichtlich. Weiters ist in Fig.7 dargestellt, dass die eine Elektrode 10 über den metallischen Kontakt 10' mit Masse 15 verbunden ist, wogegen die andere Elektrode 9 über ihren metallischen Kontakt 9' an eine Signalquelle 16 mit variabler Frequenz - unter Zwischenschaltung eines Hochspannungsverstärkers 17 - angeschlossen ist. Auf diese Weise kann die erzeugte THz-Strahlung (14 in Fig.1 und 2) entsprechend der Frequenz der Vorspannung U in der Intensität gesteuert werden. Selbstverständlich können hier zur Frequenzvariation bekannte, in der Fig.7 nicht näher ersichtliche Schaltungen 18 in Verbindung mit der Signalquelle, d.h. Vorspannungsquelle 16, eingesetzt werden.

## Patentansprüche

1. Halbleiterbauelement mit einem Resonatorspiegel zur Verwendung in einem Laser, welcher Resonatorspiegel eingerichtet ist, einen modenverkoppelten Betrieb des Lasers zu ermöglichen, wobei das Halbleiterbauelement zugleich zur Erzeugung einer Terahertz (THz)-Strahlung auf Basis von auftreffenden Laserpulsen ausgebildet ist, **dadurch gekennzeichnet, dass** auf dem Resonatorspiegel (M4) eine für die Laserstrahlung (7) teilweise durchlässige Halbleiterschicht (8) vorgesehen ist, deren Absorptionskante unterhalb der Energie der Laserstrahlung (7) liegt, und auf der mit einer Vorspannungsquelle verbindbare Elektroden (9,10) angebracht sind, um die THz-Strahlung im elektrischen Feld zu erzeugen und abzustrahlen.

2. Halbleiterbauelement nach Anspruch 1, **dadurch gekenzeichnet, dass** der Resonatorspiegel (M4) ein Resonatorendspiegel ist.

3. Halbleiterbauelement nach Anspruch 1 oder 2, **dadurch gekennzeichnet, dass** der Resonatorspiegel (M4) ein sättigbarer Bragg-Reflektor (5) ist.

4. Halbleiterbauelement nach einem der Ansprüche 1 bis 3, **dadurch gekennzeichnet, dass** die Halbleiterschicht (8) aus einem Halbleitermaterial mit kurzer Rekombinationszeit für freie Elektronen besteht.

5. Halbleiterbauelement nach einem der Ansprüche 1 bis 4, **dadurch gekennzeichnet, dass** die Halbleiterschicht (8) eine Gallium-Arsenid-(GaAs-)Schicht ist.

6. Halbleiterbauelement nach Anspruch 5, **dadurch gekennzeichnet, dass** die Halbleiterschicht (8) eine Niedertemperatur-Gallium-Arsenid-(LT-GaAs-)Schicht ist.

7. Halbleiterbauelement nach einem der Ansprüche 1 bis 4, **dadurch gekennzeichnet, dass** die Halbleiterschicht (8) eine Aluminium-Gallium-Arsenid-(AlGaAs-)Schicht ist.

8. Halbleiterbauelement nach Anspruch 7, **dadurch gekennzeichnet, dass** die Halbleiterschicht (8) eine Niedertemperatur-Aluminium-Gallium-Arsenid(LT-AlGaAs-)Schicht ist.

9. Halbleiterbauelement nach einem der Ansprüche 1 bis 8, **dadurch gekennzeichnet, dass** auf der von den Elektroden (9,10) abgewandten Seite des Resonanzspiegels (M4) eine dielektrische Linse (13) für die abgegebene THz-Strahlung angebracht ist.

10. Halbleiterbauelement nach Anspruch 9, **dadurch gekenzeichnet, dass** die dielektrische Linse (13) aus einem Material, ausgewählt aus der Gruppe umfassend Silizium, Gallium-Arsenid (GaAs) oder dergl., besteht.

11. Halbleiterbauelement nach einem der Ansprüche 1 bis 10, **dadurch gekennzeichnet, dass** die streifenförmigen, zueinander parallelen Elektroden (9,10) einen Abstand von 30 µm bis zu einigen mm voneinander haben.

12. Halbleiterbauelement nach einem der Ansprüche 1 bis 11, **dadurch gekennzeichnet, dass** die streifenförmigen Elektroden (9,10) eine Breite von 5 µm bis einigen 10 µm aufweisen.

13. Halbleiterbauelement nach einem der Ansprüche 1 bis 12, **dadurch gekennzeichnet, dass** die Elektroden (9,10) aus Metall bestehen.

14. Halbleiterbauelement nach Anspruch 13, **dadurch gekenzeichnet, dass** die Elektroden (9, 10) aus Metall, ausgewählt aus der Gruppe umfassend Gold, Aluminium, Chrom, Platin-Gold- oder Titan-Gold-Schichtsystemen, bestehen.

15. Halbleiterbauelement nach einem der Ansprüche 1 bis 12, **dadurch gekennzeichnet, dass** die Elektroden (9,10) durch dotierte Halbleitermaterial-Elektroden gebildet sind, die mit metallischen Kontakten verbunden sind.

16. Halbleiterbauelement nach einem der Ansprüche 1 bis 15, **dadurch gekennzeichnet, dass** zumindest der Intensitätsschwerpunkt des Strahlquerschnitts (7') des Laserstrahls (7) zwischen den Elektroden (9,10) liegt.

17. Einrichtung zur Erzeugung von Terahertz(THz)-Strahlung mit einem Kurzpulslaser mit Modenverkopplung, dem ein Pumpstrahl zugeführt wird, und mit einem einen Resonatorspiegel aufweisenden Halbleiterbauelement, das zugleich zur Herleitung der THz-Strahlung auf Basis von auftreffenden Laserpulsen ausgebildet ist, wobei das Halbleiterbauelement ein Halbleiterbauelement nach einem der Ansprüche 1 bis 16 ist.

18. Einrichtung nach Anspruch 17, **dadurch gekennzeichnet, dass** die Vorspannungsquelle (16) zur Abgabe variabler Vorspannungen eingerichtet ist.

## Claims

1. A semiconductor component including a resonator mirror to be used in a laser, which resonator mirror is adapted to enable mode-locked operation of the laser, wherein the semiconductor component simultaneously is designed to generate terahertz(THz) radiation on the basis of impacting laser pulses, **characterised in that** on the resonator mirror (M4), a semiconductor layer (8) partially permeable for the laser radiation (7) is provided, the absorption edge of the semiconductor layer being below the energy of the laser radiation (7) and electrodes (9, 10) connectable to a bias voltage source being mounted thereon so as to generate the THz radiation in the electric field and radiate it.

2. A semiconductor component according to claim 1, **characterised in that** the resonator mirror (M4) is a resonator end mirror.

3. A semiconductor component according to claim 1 or 2, **characterised in that** the resonator mirror (M4) is a saturable Bragg reflector (5).

4. A semiconductor component according to any one of claims 1 to 3, **characterised in that** the semiconductor layer (8) is made of a semiconductor material with short recombination time for free electrons.

5. A semiconductor component according to any one of claims 1 to 4, **characterised in that** the semiconductor layer (8) is a gallium-arsenide(GaAs) layer.

6. A semiconductor component according to claim 5, **characterised in that** the semiconductor layer (8) is a low temperature gallium-arsenide (LT-GaAs) layer.

7. A semiconductor component according to any one of claims 1 to 4, **characterised in that** the semiconductor layer (8) is an aluminium-gallium-arsenide (AlGaAs) layer.

8. A semiconductor component according to claim 7, **characterised in that** the semiconductor layer (8) is a low temperature aluminium-gallium-arsenide (LT-AlGaAs) layer.

9. A semiconductor component according to any one of claims 1 to 8, **characterised in that** a dielectric lens (13) for the emitted THz radiation is mounted on the side of the resonator mirror (M4) that faces away from the electrodes (9, 10).

10. A semiconductor component according to claim 9, **characterised in that** the dielectric lens (13) is made of a material selected from the group comprising silicon, gallium-arsenide (GaAs) or the like.

11. A semiconductor component according to any one of claims 1 to 10, **characterised in that** the strip-shaped, parallel electrodes (9, 10) are spaced at a distance of from 30 µm up to a few mm from each other.

12. A semiconductor component according to any one of claims 1 to 11, **characterised in that** the strip-shaped electrodes (9, 10) have a width of from 5 µm up to a few 10 µm.

13. A semiconductor component according to any one of claims 1 to 12, **characterised in that** the electrodes (9, 10) are made of metal.

14. A semiconductor component according to claim 13, **characterised in that** the electrodes (9, 10) are made of a metal selected from the group comprising gold, aluminium, chromium, platinum-gold- or titanium-gold-layer systems.

15. A semiconductor component according to any one of claims 1 to 12, **characterised in that** the electrodes (9, 10) are formed by doped semiconductor material electrodes connected by metallic contacts.

16. A semiconductor component according to any one of claims 1 to 15, **characterised in that** at least the intensity centre of gravity of the beam cross-section (7') of the laser beam (7) is located between the electrodes (9, 10).

17. A device for generating terahertz (THz) radiation having a short pulse laser with mode locking to which a pump beam is supplied, and a semiconductor component including a resonator-mirror, which semiconductor component simultaneously is designed for generating the THz radiation on the basis of impacting laser pulses, the semiconductor component being a semiconductor component according to any one of claims 1 to 16.

18. A device according to claim 17, **characterised in that** the bias voltage source (16) is adapted to deliver variable bias voltages.

## Revendications

1. Composant semi-conducteur pourvu d'un miroir résonateur pour une utilisation dans un laser, ledit miroir résonateur étant réglé pour permettre un fonctionnement du laser en couplage de modes, dans lequel le composant semi-conducteur est aménagé en même temps pour générer un rayonnement térahertzien (THz) à base d'impulsions laser incidentes, **caractérisé en ce que** l'on prévoit sur le miroir résonateur (M4) une couche semi-conductrice (8) en partie perméable au rayonnement laser (7), dont l'arête d'absorption se situe en dessous de l'énergie du rayonnement laser (7) et sur laquelle sont appliquées des électrodes (9, 10) qui peuvent être connectées à une source de tension de polarisation pour générer et émettre le rayonnement THz dans le champ électrique.

2. Composant semi-conducteur selon la revendication 1, **caractérisé en ce que** le miroir résonateur (M4) est un miroir résonateur final.

3. Composant semi-conducteur selon la revendication 1 ou 2, **caractérisé en ce que** le miroir résonateur (M4) est un réflecteur de Bragg saturable (5).

4. Composant semi-conducteur selon l'une quelconque des revendications 1 à 3, **caractérisé en ce que** la couche semi-conductrice (8) est constituée d'un matériau semi-conducteur doté d'un temps de recombinaison court pour les électrons libres.

5. Composant semi-conducteur selon l'une quelconque des revendications 1 à 4, **caractérisé en ce que** la couche semi-conductrice (8) est une couche d'arséniure de gallium (GaAs).

6. Composant semi-conducteur selon la revendication 5, **caractérisé en ce que** la couche semi-conductrice (8) est une couche d'arséniure de gallium à basse température (LT-GaAs).

7. Composant semi-conducteur selon l'une quelconque des revendications 1 à 4, **caractérisé en ce que** la couche semi-conductrice (8) est une couche d'arséniure d'aluminium-gallium (AlGaAs).

8. Composant semi-conducteur selon la revendication 7, **caractérisé en ce que** la couche semi-conductrice (8) est une couche d'arséniure d'aluminium-gallium à basse température (LT-AlGaAs).

9. Composant semi-conducteur selon l'une quelconque des revendications 1 à 8, **caractérisé en ce que** l'on applique sur le côté opposé aux électrodes (9,10) du miroir résonateur (M4) une lentille diélectrique (13) pour le rayonnement THz émis.

10. Composant semi-conducteur selon la revendication 9, **caractérisé en ce que** la lentille diélectrique (13) est constituée d'un matériau choisi parmi le groupe constitué du silicium, de l'arséniure de gallium (GaAs) ou similaire.

11. Composant semi-conducteur selon l'une quelconque des revendications 1 à 10, **caractérisé en ce que** les électrodes (9, 10) sous forme de bandes parallèles sont distantes l'une de l'autre de 30 µm à quelques mm.

12. Composant semi-conducteur selon l'une quelconque des revendications 1 à 11, **caractérisé en ce que** les électrodes (9, 10) sous forme de bandes ont une largeur de 5 µm à environ 10 µm.

13. Composant semi-conducteur selon l'une quelconque des revendications 1 à 12, **caractérisé en ce que** les électrodes (9,10) sont en métal.

14. Composant semi-conducteur selon la revendication 13, **caractérisé en ce que** les électrodes (9, 10) sont constituées d'un métal choisi dans le groupe constitué de l'or, l'aluminium, le chrome, des systèmes de couches platine-or ou titane-or.

15. Composant semi-conducteur selon l'une quelconque des revendications 1 à 12, **caractérisé en ce que** les électrodes (9,10) sont formées par des électrodes de matériau semi-conducteur dopé, qui sont reliés à des contacts métalliques.

16. Composant semi-conducteur selon l'une quelconque des revendications 1 à 15, **caractérisé en ce qu'**au moins le barycentre d'intensité de la section transversale (7') du faisceau laser (7) se situe entre les électrodes (9,10).

17. Dispositif pour générer un rayonnement térahertzien (THz) pourvu d'un laser à impulsions courtes avec couplage de modes, auquel est acheminé un rayon de pompage, et d'un composant semi-conducteur présentant un miroir résonateur, qui est aménagé simultanément de manière à délivrer un rayonnement THz à base d'impulsions laser incidentes, le composant semi-conducteur étant un composant semi-conducteur selon l'une quelconque des revendications 1 à 16.

18. Dispositif selon la revendication 17, **caractérisé en ce que** la source de tension de polarisation (16) est réglée pour délivrer des tensions de polarisation variables.
